# EUROPEAN PATENT SPECIFICATION

(11) **EP 3 937 149 B1**
(45) Date of publication and mention of the grant of the patent: **03.09.2025**
(21) Application number: 21180072.7
(22) Date of filing: 17.06.2021
(51) Int. Cl.: G08C 17/02, G06F 3/02, G08C 19/02, G06F 3/023, G06F 3/0354, G06F 3/038

(54) **SMALL AND PORTABLE INPUT DEVICE WITH FUNCTIONS FOR STARTING AND CONTROLLING DOCUMENT DISPLAY**
KLEINE UND TRAGBARE EINGABEVORRICHTUNG MIT FUNKTIONEN ZUM STARTEN UND STEUERN EINER DOKUMENTANZEIGE
DISPOSITIF D'ENTRÉE PETIT ET PORTABLE COMPORTANT DES FONCTIONS POUR DÉMARRER ET COMMANDER L'AFFICHAGE DE DOCUMENTS

(30) Priority: 08.07.2020 CN 202010652090
(43) Date of publication of application: 12.01.2022
(73) Proprietor: Fulian Precision Electronics (Tianjin) Co., LTD., Tianjin (CN)
(72) Inventor: TSENG, CHUANG-WEI, New Taipei (TW); CHIEN, YU-CHING, New Taipei (TW); ZENG, HONG-YI, Taoyuan (TW)
(74) Representative: Zaboliene, Reda

(56) References cited:
- KR-A- 20180 054 052
- US-A1- 2011 231 194
- US-A1- 2013 027 315

## Description

### FIELD

The subject matter herein generally relates to image displays, and particularly, to an input device encompassing all functions required for display and display control.

### BACKGROUND

To do a speech of a document, a display unit, a computer, and an input device must be employed and a document in the computer must be firstly projected onto the display unit via operating the input device. The computer and the input device work together and are both required. However, a computer is often something which is large and heavy and difficult to bring into a projection environment. To project a stored document from the computer onto the display unit, cumbersome operations such as, for example, opening a folder, opening the document, and so on, must be executed. US2013/0027315A1 discloses a method and system that may detect an external display coupled to the mobile device. A digital input device may be presented on the integrated touch sensitive display of the mobile device to operate the mobile device. Multimedia content may be presented on the external display in response to the operation of the mobile device through the digital input device.

### BRIEF DESCRIPTION OF THE DRAWINGS

Implementations of the present technology will now be described, by way of embodiment, with reference to the attached figures.
FIG. 1 is a block diagram of an input device, an external display device, an external electronic device, and an external cloud platform.
FIG. 2 is a view of the input device of FIG. 1 coupled to the external display device via wires.
FIG. 3 is a view of the input device of FIG. 1 coupled wirelessly to the external display device.

### DETAILED DESCRIPTION

The present disclosure is made in conjunction with corresponding drawings in the embodiments. Obviously, the described embodiments are merely a part of the embodiments of the present disclosure and not all the embodiments. Based on the embodiments of the present disclosure, all other embodiments obtained by those ordinarily skilled in the art without paying creative work fall within the protection scope of the present disclosure.

When one component is considered to "couple" to another component, it may be directly connected to the other component or there may be a third component between them.

Unless otherwise defined, all the technical and scientific terms used in this specification convey the same meanings as the meanings commonly understood by a person skilled in the art. Additionally, the terms used in the specification the present disclosure are merely for describing the objective of the specific embodiments, and are not intended to limit the present disclosure. The term "and/or," includes any and all combinations of one or more of the associated listed items.

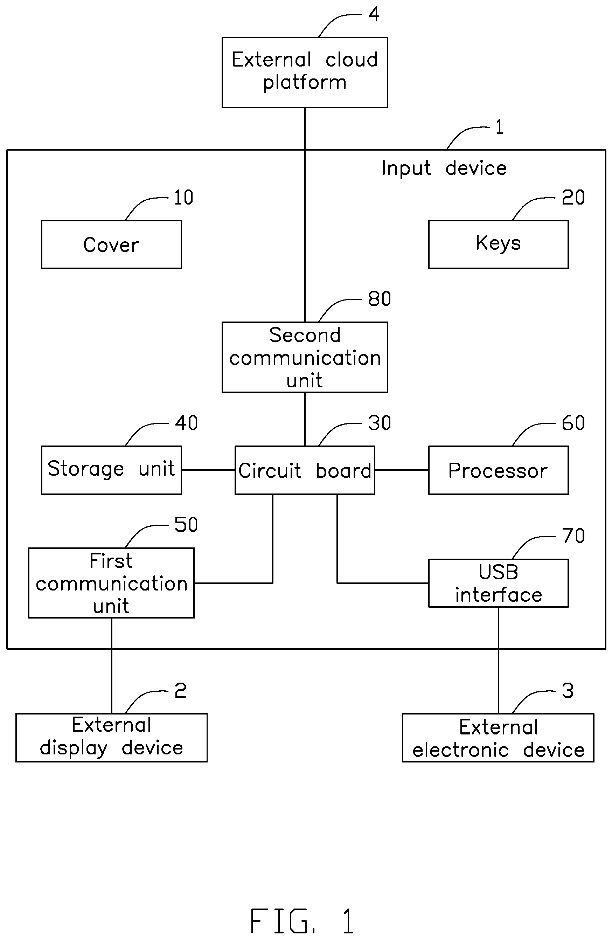

FIG. 1 is a block diagram of an input device 1, an external display device 2, an external electronic device 3, and an external cloud platform 4. The input device 1 includes a cover 10, a number of keys 20, a circuit board 30, a storage unit 40, a first communication unit 50, and a processor 60. The keys 20 are arranged on an external surface of the cover 10. The circuit board 30 is arranged in the cover 10. The storage unit 40 is electrically coupled to the circuit board 30. In the embodiment, the storage unit 40 can include, but is not limited to, a random access memory, an optical disc memory, a disk memory, a tape memory, or any other medium capable of storing various data. The storage unit 40 stores a computer operating system and a preset document. The first communication unit 50 is electrically coupled to the circuit board 30. The first communication unit 50 is configured to enable the input device 1 to communicate with the external display device 2. The processor 60 is electrically coupled to the circuit board 30. The processor 60 can be a central processing unit, a microprocessor, a digital processing chip, or any other processing chip. The processor 60 is configured to generate a starting signal when a first preset condition is met, execute the computer operating system and the preset document in the computer operating system according to the starting signal, and transmit the executed preset document to the external display device 2 to display via the first communication unit 50. In the embodiment, the circuit board 30, the storage unit 40, the first communication unit 50, and the processor 60 are fixed in the cover 10. The input device 1 can be a mouse, a keyboard, or other input device. The computer operating system is a micro-computer architecture. The computer operating system can execute a part of function of the standard computer operating system when being executed.

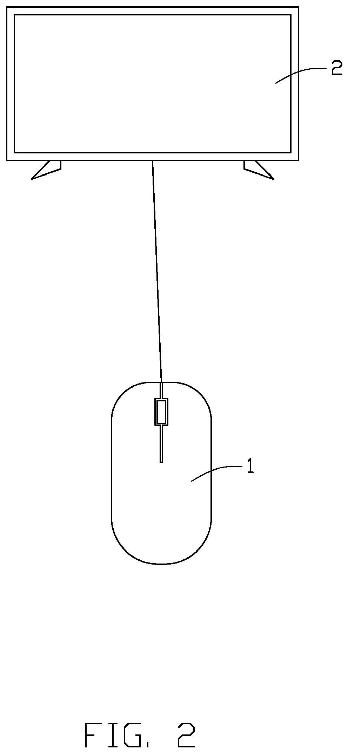

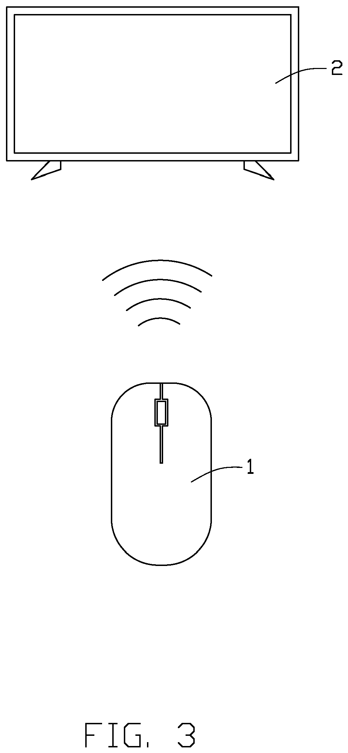

The first preset condition includes the input device 1 being coupled to the external display device 2 via the first communication unit 50. Referring to FIG. 2, the first communication unit 50 is a high-definition multimedia interface (hereinafter HDMI). The first preset condition includes the input device 1 being coupled by wires to the external display device 2 via the HDMI. In detail, the first preset condition includes the input device 1 being coupled by the wires to the external display device 2 via the HDMI and an HDMI wire. FIG. 2 illustrates that the input device 1 is a mouse, but is not restricted thereto. In case the input device 1 is a mouse, the keys 20 can include a mouse wheel in addition to clickable left and right buttons. The input device 1 can also be a keyboard or other small input device with the keys 20. Referring to FIG. 3, the first communication unit 50 can be a wireless local area network communication unit. The storage unit 40 stores software enabling image projections. The first preset condition includes receiving a first preset operation on the keys 20 coupling the input device 1 wirelessly to the external display device 2 via the software enabling the image projections and the wireless local area network communication unit. FIG. 3 illustrates that the input device 1 is a mouse, but without being restricted thereto. The input device 1 can be a keyboard or other input device. In detail, the wireless local area network communication unit is a WIFI unit, a BLUETOOTH unit, a ZIGBEE unit, a Narrow Band Internet of Things unit, or the like. In the embodiment, the first preset operation on the keys 20 includes a first preset operation on the at least one key of the input device 1, for example, a press on a first key and a third key of the input device 1, or the like. Obviously, the present disclosure is not limited to the input device 1 including the HDMI or the wireless local area network communication unit, the input device 1 can include the HDMI and the wireless local area network communication unit.

The first preset condition can include a second preset operation on the keys 20. The second preset operation on the keys 20 can be same or different from the first preset operation on the keys 20. A difference between the second preset operation on the keys 20 and the first preset operation on the keys 20 can be either a button difference or an operation difference. For example, the second preset operation on the keys 20 can be an operation on a second key and the third key, and the first preset operation on the keys 20 can be an operation on the first key only. Or, the second preset operation on the keys 20 can be a wheel-roll on the first key, and the first preset operation on the keys 20 can be a pressing on the first key.

The processor 60 can detect a preset operation on the keys 20, and determine whether the preset operation on the keys 20 is being carried out for a first time. If the first preset condition includes receiving a first preset operation on the keys 20 to cause the input device 1 to be wirelessly coupled to the external display device 2 via the software and the wireless local area network communication unit, the preset operation is the first preset operation. If the first preset condition includes a second preset operation on the keys 20, the preset operation is the second preset operation. If the preset operation on the keys 20 is being carried out for the first time, the processor 60 is configured to generate the starting signal accordingly. If the preset operation on the keys 20 is not being carried out for the first time, the processor 60 is further configured to generate a control signal according to the preset operation on the keys 20, and control a play of the preset document being displayed on the external display device 2 via the first communication unit 50 according to the control signal. The play of the preset document being displayed on the external display device 2 includes a page up function of the displayed preset document, a page down function of the displayed preset document, and so on.

The input device 1 further includes a USB interface 70. The USB interface 70 is electrically coupled to the circuit board 30. The USB interface 70 is configured to enable the input device 1 to couple to the external electronic device 3 to obtain the preset document from the external electronic device 3. The USB interface 70 is fixed in the cover 10. The external electronic device 3 can be a computer, a smart phone, or the like.

The processor 60 is further configured to generate an operation signal when a second preset condition is met, execute the computer functions of the computer operating system according to the operation signal, and transmit the computer functions to the external display device 2 for the display via the first communication unit 50. The second preset condition includes a third preset operation on the keys 20. The third preset operation on the keys 20 is different from the first and second preset operations on the keys 20. A difference between the third preset operation on the keys 20 and the second preset operation on the keys 20 can be either the button difference or the operation difference. A difference between the third preset operation on the keys 20 and the first preset operation on the keys 20 can be either the button difference or the operation difference. Thus, the input device 1 can function in the manner of a computer, display the executed computer operating system on the external display device 2, and operate and control the computer operating system via the input device 1.

The processor 60 is further coupled to the external cloud platform 4 to improve operability of the input device 1. In detail, the input device 1 further includes a second communication unit 80. The second communication unit 80 enables the input device 1 to communicate with the external cloud platform 4. The second communication unit 80 includes a wired communication unit. Obviously, when the first communication unit 50 does not include the WIFI unit, the second communication unit 80 can include the WIFI unit. The processor 60 is further coupled to the external cloud platform 4 to improve the operability of the input device 1 via the wired communication unit or the WIFI unit. Thus, the connection with the external cloud platform 4 improves the operation ability of the input device 1 even if the input device 1 only stores the micro-computer architecture.

The disclosure is not limited to the above embodiment, the operated keys 20 when generating the starting signal can be different from when controlling the display of the preset document. For example, the generation of the starting signal by the operated keys 20 can be sequential pressing a left key of the mouse and a right key of the mouse, and the control of the document display by the operated keys 20 can be pressing just the left key of the mouse or the right key of the mouse. Alternatively, the operation when generating the starting signal can be different from the operation when controlling the display of the preset document displayed on the external display device 2. Thus, determining whether the preset operation on the keys 20 is being carried out for the first time or otherwise is not required. The processor 60 is further configured to generate the control signal according to a fourth preset operation on the keys 20, and control the play of the preset document via the first communication unit 50 according to the control signal.

The disclosure stores the computer operating system and the preset document in the input device 1, executes the computer operating system and the preset document in the computer operating system according to the starting signal when the operation on the input device 1 meets the first preset condition, and transmits the executed preset document to the external display device 2 to be displayed via the first communication unit 50. Thus, a small input device 1 is the only hardware required, a large computer does not need to be brought in to the display room. Simultaneously, the operations on the input device 1 need only to meet the first preset condition to achieve display of the preset document, without further complicated or cumbersome operations.

It should be noted that the above embodiments are merely to illustrate the technical solutions of the present disclosure and are not intended to be limiting. Preferred examples with reference to the present disclosure have been described in detail but a person skilled in the art will understand that the present disclosure may be modified or may be carried out without departing from the scope of the present disclosure.

## Claims

1. An input device (1) is a mouse; the input device (1) comprising:
a cover (10);
a plurality of keys (20) arranged on an external surface of the cover (10), the plurality of keys include a mouse wheel in addition to clickable left and right buttons;
a circuit board (30) arranged in the cover (10);
a storage unit (40) coupled to the circuit board (30), the storage unit (40) storing a computer operating system and a preset speech document;
a first communication unit (50) coupled to the circuit board (30), the first communication unit (50) configured to enable the input device (1) to communicate with an external display device (2); and
a processor (60) coupled to the circuit board (30), **characterized in that** the processor (60) configured to generate a starting signal when a first preset condition is met, execute the computer operating system and the preset document in the computer operating system according to the starting signal, and transmit the executed preset document to the external display device (2) for display via the first communication unit (50);
the processor (60) is further configured to generate an operation signal when a second preset condition is met, execute computer functions of the computer operating system according to the operation signal, and transmit the executed computer functions to the external display device (2) for the display via the first communication unit (50).

2. The input device (1) according to claim 1, wherein the first preset condition comprises the input device (1) being coupled to the external display device (2) via the first communication unit (50).

3. The input device (1) according to claim 2, wherein the first communication unit (50) is a high-definition multimedia interface, the first preset condition comprises the input device (1) being coupled by wires to the external display device (2) via the high-definition multimedia interface.

4. The input device (1) according to claim 2, wherein the storage unit (40) stores software enabling image projections, the first communication unit (50) is a wireless local area network communication unit, the first preset condition comprises receiving a first preset operation on the plurality of keys (20) coupling the input device (1) wirelessly to the external display device (2) via the software enabling the image projections and the wireless local area network communication unit.

5. The input device (1) according to claim 1, wherein the first preset condition comprises a second preset operation on the plurality of keys (20).

6. The input device (1) according to claim 1, wherein:
the processor (60) is configured to detect a preset operation on the plurality of keys (20), and determine whether the preset operation on the plurality of keys (20) is being carried out for a first time, if the first preset condition comprises receiving a first preset operation on the plurality of keys (20) to cause the input device (1) to be wirelessly coupled to the external display device (2) via software enabling image projections and a wireless local area network communication unit, the preset operation is the first preset operation, if the first preset condition comprises a second preset operation on the plurality of keys (20), the preset operation is the second preset operation;
the processor (60) is configured to generate the starting signal according to the preset operation on the plurality of keys (20) if the preset operation on the plurality of keys (20) is being carried out for the first time.

7. The input device (1) according to claim 6, wherein:
if the preset operation on the plurality of keys (20) is not being carried out for the first time, the processor (60) is further configured to generate a control signal according to the preset operation on the plurality of keys (20), and control a play of the preset document being displayed on the external display device (2) via the first communication unit (50) according to the control signal.

8. The input device (1) according to claim 1, wherein:
the input device (1) further comprises a USB interface (70), the USB interface (70) is electrically coupled to the circuit board (30), the USB interface (70) is configured to enable the input device (1) to couple to an external electronic device (3) to obtain the preset document from the external electronic device (3).

9. The input device (1) according to claim 1, wherein the processor (60) is further configured to be coupled to an external cloud platform (4) to improve operation ability of the input device (1).

## Patentansprüche

1. Eine Eingabevorrichtung (1), die eine Maus ist, wobei die Eingabevorrichtung (1) umfasst:
ein Gehäuse (10);
eine Mehrzahl von Tasten (20), die auf einer äußeren Oberfläche des Gehäuses (10) angeordnet sind, wobei die Mehrzahl von Tasten ein Mausrad zusätzlich zu anklickbaren linken und rechten Tasten umfasst;
eine Leiterplatte (30), die in dem Gehäuse (10) angeordnet ist;
eine Speichereinheit (40), die mit der Leiterplatte (30) gekoppelt ist, wobei die Speichereinheit (40) ein Computersystem und ein voreingestelltes Präsentationsdokument speichert;
eine erste Kommunikationseinheit (50), die mit der Leiterplatte (30) gekoppelt ist, wobei die erste Kommunikationseinheit (50) dazu eingerichtet ist, die Eingabevorrichtung (1) mit einer externen Anzeigevorrichtung (2) zu verbinden; und
einen Prozessor (60), der mit der Leiterplatte (30) gekoppelt ist, **dadurch gekennzeichnet, dass** der Prozessor (60) dazu eingerichtet ist, ein Startsignal zu erzeugen, wenn eine erste voreingestellte Bedingung erfüllt ist, das Computersystem und das voreingestellte Dokument in dem Computersystem gemäß dem Startsignal auszuführen und das ausgeführte voreingestellte Dokument über die erste Kommunikationseinheit (50) an die externe Anzeigevorrichtung (2) zur Anzeige zu übertragen;
wobei der Prozessor (60) weiterhin dazu eingerichtet ist, ein Betriebssignal zu erzeugen, wenn eine zweite voreingestellte Bedingung erfüllt ist, Computerfunktionen des Computersystems gemäß dem Betriebssignal auszuführen und die ausgeführten Computerfunktionen über die erste Kommunikationseinheit (50) an die externe Anzeigevorrichtung (2) zur Anzeige zu übertragen.

2. Die Eingabevorrichtung (1) nach Anspruch 1, wobei die erste voreingestellte Bedingung umfasst, dass die Eingabevorrichtung (1) über die erste Kommunikationseinheit (50) mit der externen Anzeigevorrichtung (2) verbunden ist.

3. Die Eingabevorrichtung (1) nach Anspruch 2, wobei die erste Kommunikationseinheit (50) eine Hochauflösende-Multimedia-Schnittstelle ist, wobei die erste voreingestellte Bedingung umfasst, dass die Eingabevorrichtung (1) über Kabel über die Hochauflösende-Multimedia-Schnittstelle mit der externen Anzeigevorrichtung (2) verbunden ist.

4. Die Eingabevorrichtung (1) nach Anspruch 2, wobei die Speichereinheit (40) eine Software speichert, die Bildprojektionen ermöglicht, wobei die erste Kommunikationseinheit (50) eine Kommunikationseinheit für ein drahtloses lokales Netzwerk ist, wobei die erste voreingestellte Bedingung den Empfang einer ersten voreingestellten Betätigung an der Mehrzahl von Tasten (20) umfasst, die die Eingabevorrichtung (1) drahtlos mit der externen Anzeigevorrichtung (2) über die die Bildprojektionen ermöglichende Software und die Kommunikationseinheit für ein drahtloses lokales Netzwerk koppelt.

5. Die Eingabevorrichtung (1) nach Anspruch 1, wobei die erste voreingestellte Bedingung eine zweite voreingestellte Betätigung an der Mehrzahl von Tasten (20) umfasst.

6. Die Eingabevorrichtung (1) nach Anspruch 1, wobei:
der Prozessor (60) dazu eingerichtet ist, eine voreingestellte Betätigung an der Mehrzahl von Tasten (20) zu erkennen und festzustellen, ob die voreingestellte Betätigung an der Mehrzahl von Tasten (20) zum ersten Mal durchgeführt wird, wobei, wenn die erste voreingestellte Bedingung den Empfang einer ersten voreingestellten Betätigung an der Mehrzahl von Tasten (20) umfasst, um die Eingabevorrichtung (1) drahtlos mit der externen Anzeigevorrichtung (2) über eine die Bildprojektionen ermöglichende Software und eine Kommunikationseinheit für ein drahtloses lokales Netzwerk zu koppeln, die voreingestellte Betätigung die erste voreingestellte Betätigung ist, und wobei,
wenn die erste voreingestellte Bedingung eine zweite voreingestellte Betätigung an der Mehrzahl von Tasten (20) umfasst, die voreingestellte Betätigung die zweite voreingestellte Betätigung ist;
der Prozessor (60) dazu eingerichtet ist, das Startsignal in Abhängigkeit von der voreingestellten Betätigung an der Mehrzahl von Tasten (20) zu erzeugen, wenn die voreingestellte Betätigung an der Mehrzahl von Tasten (20) zum ersten Mal durchgeführt wird.

7. Die Eingabevorrichtung (1) nach Anspruch 6, wobei,
wenn die voreingestellte Betätigung an der Mehrzahl von Tasten (20) nicht zum ersten Mal durchgeführt wird, der Prozessor (60) weiterhin dazu eingerichtet ist, ein Steuersignal entsprechend der voreingestellten Betätigung an der Mehrzahl von Tasten (20) zu erzeugen und eine Wiedergabe des voreingestellten Dokuments, das auf der externen Anzeigevorrichtung (2) über die erste Kommunikationseinheit (50) angezeigt wird, in Abhängigkeit von dem Steuersignal zu steuern.

8. Die Eingabevorrichtung (1) nach Anspruch 1, wobei:
die Eingabevorrichtung (1) weiterhin eine USB-Schnittstelle (70) umfasst, wobei die USB-Schnittstelle (70) elektrisch mit der Leiterplatte (30) gekoppelt ist, wobei die USB-Schnittstelle (70) dazu eingerichtet ist, die Eingabevorrichtung (1) mit einem externen elektronischen Gerät (3) zu koppeln, um das voreingestellte Dokument von dem externen elektronischen Gerät (3) zu erhalten.

9. Die Eingabevorrichtung (1) nach Anspruch 1, wobei der Prozessor (60) weiterhin dazu eingerichtet ist, mit einer externen Cloud-Plattform (4) gekoppelt zu werden, um die Funktionsfähigkeit der Eingabevorrichtung (1) zu verbessern.

## Revendications

1. Un dispositif d'entrée (1) qui est une souris, le dispositif d'entrée (1) comprenant:
un boîtier (10);
une pluralité de touches (20) disposées sur une surface externe du boîtier (10), la pluralité de touches comprenant une molette de souris en plus de boutons gauche et droit cliquables;
un circuit imprimé (30) disposé dans le boîtier (10);
une unité de stockage (40) couplée au circuit imprimé (30), l'unité de stockage (40) stockant un système d'exploitation informatique et un document de présentation prédéfini;
une première unité de communication (50) couplée au circuit imprimé (30), la première unité de communication (50) étant configurée pour permettre au dispositif d'entrée (1) de communiquer avec un dispositif d'affichage externe (2); et
un processeur (60) couplé au circuit imprimé (30), **caractérisé en ce que** le processeur (60) est configuré pour générer un signal de démarrage lorsqu'une première condition prédéfinie est remplie, exécuter le système d'exploitation informatique et le document prédéfini dans le système d'exploitation informatique selon le signal de démarrage, et transmettre le document prédéfini exécuté au dispositif d'affichage externe (2) pour affichage via la première unité de communication (50);
le processeur (60) étant en outre configuré pour générer un signal d'opération lorsqu'une seconde condition prédéfinie est remplie, exécuter des fonctions informatiques du système d'exploitation informatique selon le signal d'opération, et transmettre les fonctions informatiques exécutées au dispositif d'affichage externe (2) pour affichage via la première unité de communication (50).

2. Le dispositif d'entrée (1) selon la revendication 1, dans lequel la première condition prédéfinie comprend le fait que le dispositif d'entrée (1) est couplé au dispositif d'affichage externe (2) via la première unité de communication (50).

3. Le dispositif d'entrée (1) selon la revendication 2, dans lequel la première unité de communication (50) est une interface multimédia haute définition, la première condition prédéfinie comprenant le fait que le dispositif d'entrée (1) est couplé par des fils au dispositif d'affichage externe (2) via l'interface multimédia haute définition.

4. Le dispositif d'entrée (1) selon la revendication 2, dans lequel l'unité de stockage (40) stocke un logiciel permettant des projections d'images, la première unité de communication (50) est une unité de communication de réseau local sans fil, la première condition prédéfinie comprenant la réception d'une première opération prédéfinie sur la pluralité de touches (20) couplant le dispositif d'entrée (1) sans fil au dispositif d'affichage externe (2) au moyen du logiciel permettant les projections d'images et de l'unité de communication de réseau local sans fil.

5. Le dispositif d'entrée (1) selon la revendication 1, dans lequel la première condition prédéfinie comprend une seconde opération prédéfinie sur la pluralité de touches (20).

6. Le dispositif d'entrée (1) selon la revendication 1, dans lequel:
le processeur (60) est configuré pour détecter une opération prédéfinie sur la pluralité de touches (20), et déterminer si l'opération prédéfinie sur la pluralité de touches (20) est effectuée pour la première fois, si la première condition prédéfinie comprend la réception d'une première opération prédéfinie sur la pluralité de touches (20) afin d'amener le dispositif d'entrée (1) à être couplé sans fil au dispositif d'affichage externe (2) au moyen d'un logiciel permettant les projections d'images et d'une unité de communication de réseau local sans fil,
l'opération prédéfinie est la première opération prédéfinie, si la première condition prédéfinie comprend une seconde opération prédéfinie sur la pluralité de touches (20), l'opération prédéfinie est la seconde opération prédéfinie;
le processeur (60) étant configuré pour générer le signal de démarrage en fonction de l'opération prédéfinie sur la pluralité de touches (20) si l'opération prédéfinie sur la pluralité de touches (20) est effectuée pour la première fois.

7. Le dispositif d'entrée (1) selon la revendication 6, dans lequel:
si l'opération prédéfinie sur la pluralité de touches (20) n'est pas effectuée pour la première fois, le processeur (60) est en outre configuré pour générer un signal de commande en fonction de l'opération prédéfinie sur la pluralité de touches (20), et pour commander une lecture du document prédéfini affiché sur le dispositif d'affichage externe (2) via la première unité de communication (50) en fonction du signal de commande.

8. Le dispositif d'entrée (1) selon la revendication 1, dans lequel:
le dispositif d'entrée (1) comprend en outre une interface USB (70), l'interface USB (70) étant électriquement couplée au circuit imprimé (30), l'interface USB (70) étant configurée pour permettre au dispositif d'entrée (1) d'être couplé à un dispositif électronique externe (3) afin d'obtenir le document prédéfini depuis le dispositif électronique externe (3).

9. Le dispositif d'entrée (1) selon la revendication 1, dans lequel le processeur (60) est en outre configuré pour être couplé à une plateforme d'informatique en nuage (4) afin d'améliorer la capacité de fonctionnement du dispositif d'entrée (1).
